# EUROPÄISCHE PATENTANMELDUNG

(11) **EP 2 554 882 A1**
(43) Veröffentlichungstag der Anmeldung: **06.02.2013**
(21) Anmeldenummer: 12175807.2
(22) Anmeldetag: 10.07.2012
(51) Int. Cl.: F16K 17/16, H01M 2/12

(54) **Druckausgleichsvorrichtung für ein Gehäuse einer elektrochemischen Vorrichtung**

(30) Priorität: 03.08.2011 DE 102011080325
(71) Anmelder: ElringKlinger AG, 72581 Dettingen (DE)
(72) Erfinder: Heim, Frank, 72141 Walddorfhäslach (DE); Groshert, Jan, 72581 Dettingen (DE); Sträußl, Thomas, 86381 Krumbach (DE)
(74) Vertreter: Hoeger, Stellrecht & Partner Patentanwälte

(57) **Zusammenfassung**

Um eine Druckausgleichsvorrichtung zum Ausgleichen eines Innendrucks in einem Gehäuse einer elektrochemischen Vorrichtung, umfassend mindestens eine Gasdurchtrittsöffnung und mindestens ein Membranelement mit einer in Abhängigkeit von einer Änderung des Innendrucks verformbaren, gaspermeablen Membran, durch welche die Gasdurchtrittsöffnung gesperrt ist, zu schaffen, welche sowohl einen zuverlässigen Druckausgleich zwischen dem Innenraum des Gehäuses und dem Außenraum des Gehäuses einer elektrochemischen Vorrichtung im Normalbetrieb der elektrochemischen Vorrichtung ermöglicht als auch einen zuverlässigen Berstschutz im Falle eines überhöhten Innendrucks in dem Gehäuse gewährleistet, wobei die Druckausgleichsvorrichtung einfach aufgebaut und einfach herstellbar ist, wird vorgeschlagen, dass die Druckausgleichsvorrichtung ein Notentgasungselement umfasst, welches so ausgebildet und angeordnet ist, dass es bei Erreichen einer kritischen Verformung der Membran die Membran derart beschädigt, dass die Membran die Gasdurchtrittsöffnung zumindest teilweise für eine Notentgasung des Gehäuses freigibt.

## Beschreibung

Die vorliegende Erfindung betrifft eine Ausgleichsvorrichtung zum Ausgleichen eines Innendrucks in einem Gehäuse einer elektrochemischen Vorrichtung, wobei die Druckausgleichsvorrichtung mindestens eine Gasdurchtrittsöffnung und mindestens ein Membranelement mit einer in Abhängigkeit von einer Änderung des Innendrucks verformbaren, gaspermeablen Membran, durch welche die Gasdurchtrittsöffnung gesperrt ist, umfasst.

Geschlossene Behälter mit großem Innenvolumen und dünner Wandung können nicht vollständig hermetisch gegenüber der Außenwand abgeschottet werden. Um ein Bersten oder Ausbeulen des Gehäuses des Behälters zu verhindern, ist ein kontinuierlicher Luftaustausch mit der Umgebung notwendig. Dennoch soll der Innenraum des Gehäuses vor eindringendem Schmutz und Wasser geschützt werden.

Es sind daher Druckausgleichsvorrichtungen für solche Gehäuse der eingangs genannten Art bekannt, welche Membranen oder Folien umfassen, die eine gewisse Gaspermeabilität, insbesondere Luftdurchlässigkeit, aber auch eine Dichtheit gegenüber Wasser aufweisen.

Entsteht innerhalb des Gehäuses innerhalb kurzer Zeit ein hoher Überdruck, beispielsweise beim Versagen einer Batteriezelle innerhalb eines Energiespeichergehäuses, so muss dieser kritische Druck rasch abgebaut werden können, um eine Beschädigung des Gehäuses zu verhindern.

Zur Realisierung eines solchen Berstschutzes für das Gehäuse ist bekannt, Berstscheiben, insbesondere aus einem metallischen Blechmaterial, oder Sicherheitsklappen oder Ventile in die Gehäusewand einzusetzen.

Der vorliegenden Erfindung liegt die Aufgabe zugrunde, eine Druckausgleichsvorrichtung der eingangs genannten Art zu schaffen, welche sowohl einen zuverlässigen Druckausgleich zwischen dem Innenraum des Gehäuses und dem Außenraum des Gehäuses einer elektrochemischen Vorrichtung im Normalbetrieb der elektrochemischen Vorrichtung ermöglicht als auch einen zuverlässigen Berstschutz im Falle eines überhöhten Innendrucks in dem Gehäuse gewährleistet, wobei die Druckausgleichsvorrichtung einfach aufgebaut und einfach herstellbar ist.

Diese Aufgabe wird bei einer Druckausgleichsvorrichtung mit den Merkmalen des Oberbegriffs von Anspruch 1 erfindungsgemäß dadurch gelöst, dass die Druckausgleichsvorrichtung ein Notentgasungselement umfasst, welches so ausgebildet und angeordnet ist, dass es bei Erreichen einer kritischen Verformung der Membran die Membran derart beschädigt, dass die Membran die Gasdurchtrittsöffnung zumindest teilweise für eine Notentgasung des Gehäuses freigibt.

Der erfindungsgemäßen Lösung liegt somit das Konzept zugrunde, die Funktionen von Druckausgleich und Notentgasung für das Gehäuse der elektrochemischen Vorrichtung, bei gleichzeitig hoher Beständigkeit gegenüber einem hohen Wasserdruck im Außenraum des Gehäuses, in ein und demselben Bauteil zu kombinieren.

Der Einsatz einer stabilen, aber porösen und damit gaspermeablen Membran erfüllt die Druckausgleichsfunktion und den Schutz des Innenraumes des Gehäuses vor eindringendem Wasser und Schmutz im Normalbetrieb der elektrochemischen Vorrichtung.

Die Verwendung eines Notentgasungselements, beispielsweise in Form eines Notentgasungsstachels, welches der porösen Membran bei einem Druckanstieg bis auf einen kritischen Druck eine Sollbruchstelle, die zum gewollten Versagen der Membran führt, zufügt, gewährleistet den erforderlichen Berstschutz für das Gehäuse.

Im Gegensatz hierzu sind bei bekannten Vorrichtungen immer zwei verschiedene Bauelemente notwendig, nämlich ein erstes für den Druckausgleich bei umweltbedingten Druckschwankungen im Normalbetrieb der elektrochemischen Vorrichtung und ein zweites Element für den raschen Druckabbau bei explosionsartigem Anstieg des Innendrucks im Gehäuse der elektrochemischen Vorrichtung. Dabei muss das erste Element eine gewisse Gaspermeabilität und Wasserdruckbeständigkeit für den Druckausgleich aufweisen, und das zweite Element muss bei einem kritischen Druckanstieg einen raschen Druckausgleich durch Freigabe eines genügend großen Gasdurchtrittsquerschnittes ermöglichen.

Wird das Element für den Druckausgleich als eine Membran ausgebildet, die so dünn ausgelegt ist, dass sie beim kritischen Druck von alleine reißt, besteht immer die Gefahr, dass ein solches Versagen der Membran nicht nur durch Beaufschlagung mit einem kritischen Innendruck auftritt, sondern auch ungewollt durch eine Wasserdruckbeaufschlagung aus dem Außenraum des Gehäuses.

Bei der erfindungsgemäßen Druckausgleichsvorrichtung kommt hingegen eine Membran mit porösen Eigenschaften zum Einsatz, die eine gewisse Gaspermeabilität zur Gewährleistung des Druckausgleiches zwischen dem Innenraum und dem Außenraum des Gehäuses aufweist, aber so ausgelegt ist, dass sie eine ausreichende Wasserdruckbeständigkeit zum Schutz des Innenraums des Gehäuses vor eindringendem Staub und Wasser aufweist.

Die Membran der erfindungsgemäßen Druckausgleichsvorrichtung reißt bei einem kritischen Druckanstieg im Innenraum des Gehäuses nicht von alleine ein, sondern erst dann, wenn die Membran durch Einwirkung des Notentgasungselements auf die Membran derart beschädigt wird, dass die Membran auf diese Beschädigung hin innerhalb sehr kurzer Zeit (innerhalb weniger Millisekunden) versagt und einen hinreichend großen Querschnitt für die Notentgasung des Gehäuses freigibt.

Das Notentgasungselement kann insbesondere als ein, vorzugsweise ortsfester oder feststehender, Notentgasungsstachel ausgebildet sein. Durch Beaufschlagung mit einem erhöhten Innendruck im Gehäuse der elektrochemischen Vorrichtung wölbt sich die Membran zu dem Notentgasungsstachel hin aus. Bei einem kritischen Überdruck im Innenraum des Gehäuses trifft die Membran auf den Notentgasungsstachel, wobei der Notentgasungsstachel der Membran eine Vorbeschädigung zufügt, die zum letztendlichen Versagen der Membran innerhalb weniger Millisekunden führt, so dass die Membran einen genügend großen Querschnitt zur Notentgasung freigibt und die Gasdurchtrittsöffnung der Druckausgleichsvorrichtung nicht mehr sperrt.

Durch Einstellung des Abstands zwischen dem Notentgasungselement, insbesondere dem Notentgasungsstachel, und der Membran (im Ruhezustand der Membran ohne Auswölbung, das heißt wenn der Innendruck in dem Gehäuse der elektrochemischen Vorrichtung dem Außendruck im Außenraum des Gehäuses entspricht) kann der Berstdruck, der zur Beschädigung der Membran führt, individuell und genau eingestellt werden.

Bei einer bevorzugten Ausgestaltung der Erfindung umfasst die Membran ein poröses Kunststoffmaterial und ist vorzugsweise im Wesentlichen vollständig aus einem solchen porösen Kunststoffmaterial gebildet.

Insbesondere kann vorgesehen sein, dass die Membran ein Fluorpolymer-Material umfasst und vorzugsweise im Wesentlichen vollständig aus einem Fluorpolymer-Material gebildet ist.

Besonders günstig ist es, wenn die Membran ein Polytetrafluorethylen-Material und/oder ein Polytetrafluorethylen-Compound umfasst und vorzugsweise im Wesentlichen vollständig aus einem der genannten Materialien gebildet ist.

Unter einem Polytetrafluorethylen-Compound ist dabei ein Gemisch aus einem Polytetrafluorethylen-Material und einem oder mehreren Füllstoffen zu verstehen.

Der Begriff Polytetrafluorethylen (PTFE) bezeichnet dabei in dieser Beschreibung und in den beigefügten Ansprüchen auch modifizierte Polytetrafluorethylen-Materialien, bei denen ein Teil der Fluoratome des Polytetrafluorethylen durch Substituenten ersetzt ist.

Eine poröse, gaspermeable und wasserdruckbeständige Membran aus einem PTFE-Material oder einem PTFE-Compound kann insbesondere dadurch hergestellt werden, dass ein Granulat eines PTFE-Materials oder eines PTFE-Compounds in einer zylindrischen oder hohlzylindrischen Form gepresst und gesintert wird. Aus dem so gewonnenen, gesinterten Zylinder oder Hohlzylinder wird eine Schälfolie hergestellt, indem der Zylinder bzw. der Hohlzylinder in Drehbewegung versetzt und ein Schälmesser gegen die Mantelfläche des Zylinders bzw. Hohlzylinders zugestellt wird. Aus der so gewonnenen Schälfolie kann die Membran herausgetrennt, insbesondere herausgeschnitten oder ausgestanzt, werden.

Für die Befestigung der Membran an den übrigen Bestandteilen der Druckausgleichsvorrichtung gibt es verschiedene Möglichkeiten.

So kann beispielsweise vorgesehen sein, dass die Druckausgleichsvorrichtung ein Trägerelement und ein Klemmelement umfasst, wobei das Membranelement durch Klemmung zwischen dem Trägerelement und dem Klemmelement gehalten ist.

Dabei werden das Trägerelement und das Klemmelement separat voneinander hergestellt und vorzugsweise nach dem Anordnen des Membranelements zwischen dem Trägerelement und dem Klemmelement lösbar oder unlösbar miteinander verbunden.

Beispielsweise kann vorgesehen sein, dass das Trägerelement und das Klemmelement stoffschlüssig miteinander verbunden sind.

Eine solche stoffschlüssige Verbindung kann insbesondere durch Verschwei-βen, insbesondere Laserverschweißung oder Ultraschallschweißung, erzeugt sein.

Alternativ oder ergänzend hierzu kann auch vorgesehen sein, dass das Trägerelement und das Klemmelement miteinander verrastet sind.

Alternativ hierzu kann auch vorgesehen sein, dass die Druckausgleichsvorrichtung ein Trägerelement umfasst, in dessen Material das Membranelement zumindest teilweise, insbesondere am äußeren Rand des Membranelements, eingebettet ist.

So kann insbesondere vorgesehen sein, dass das Membranelement, vorzugsweise nach dem Einlegen in ein Spritzgießwerkzeug, mit dem Material des Trägerelements umspritzt wird.

Das Membranelement kann im Wesentlichen vollständig aus der Membran bestehen.

Die erfindungsgemäße Druckausgleichsvorrichtung ist vorzugsweise mittels mindestens eines Befestigungsmittels, beispielsweise mittels mindestens einer Befestigungsschraube, an dem Gehäuse der elektrochemischen Vorrichtung, vorzugsweise lösbar, festlegbar.

Hierfür kann insbesondere vorgesehen sein, dass die Druckausgleichsvorrichtung mindestens einen Befestigungsflansch mit mindestens einer Befestigungsmittelaufnahme für ein Befestigungsmittel aufweist.

Um einen unkontrollierten Gasaustausch zwischen dem Innenraum und dem Außenraum des Gehäuses an der Druckausgleichsvorrichtung vorbei zu verhindern, ist es von Vorteil, wenn die Druckausgleichsvorrichtung mindestens ein Dichtelement zum, vorzugsweise im Wesentlichen gasdichten, Abdichten zwischen der Druckausgleichsvorrichtung und dem Gehäuse der elektrochemischen Vorrichtung umfasst.

Ein solches Dichtelement kann insbesondere ein Elastomermaterial umfassen und vorzugsweise im Wesentlichen vollständig aus einem Elastomermaterial gebildet sein.

Insbesondere kann das Dichtelement einen O-Ring umfassen.

Ferner ist es günstig, wenn die Druckausgleichsvorrichtung mindestens ein Schutzelement umfasst, durch welches eine Außenseite der Membran vor einer mechanischen Beschädigung von außerhalb der Druckausgleichsvorrichtung geschützt ist.

Ein solches Schutzelement kann insbesondere deckel- oder kappenförmig ausgebildet sein.

Um einen Durchtritt von Gas durch die Druckausgleichsvorrichtung nicht zu behindern, ist es günstig, wenn das Schutzelement mindestens eine Gasdurchgangsöffnung, vorzugsweise mehrere Gasdurchgangsöffnungen, aufweist.

Um den kritischen Berstdruck, bei welchem die Membran versagen und die Gasdurchtrittsöffnung der Druckausgleichsvorrichtung für eine Notentgasung des Gehäuses freigeben soll, besonders einfach einstellen und/oder variieren zu können, ist es günstig, wenn die Druckausgleichsvorrichtung eine Einrichtung zum Verändern der Relativposition zwischen dem Notentgasungselement und der Membran (im Ruhezustand der Membran) umfasst.

Eine solche Einrichtung zum Verändern der Relativposition kann insbesondere ein an dem Notentgasungselement vorgesehenes Einstellgewinde umfassen.

Ein solches Einstellgewinde kann insbesondere mit einem hierzu komplementären Gewinde an einem anderen Bauteil der Druckausgleichsvorrichtung, beispielsweise an einem Schutzelement der Druckausgleichsvorrichtung, zusammenwirken.

Dabei kann das Einstellgewinde des Notentgasungselements als ein Außengewinde oder ein Innengewinde und das hierzu komplementäre Gewinde entsprechend als ein Innengewinde bzw. ein Außengewinde ausgebildet sein.

Die erfindungsgemäße Druckausgleichsvorrichtung eignet sich insbesondere zur Verwendung in einer elektrochemischen Vorrichtung, welche ein Gehäuse, eine oder mehrere in dem Gehäuse angeordnete elektrochemische Zellen und mindestens eine an dem Gehäuse angeordnete erfindungsgemäße Druckausgleichsvorrichtung umfasst.

Die elektrochemische Vorrichtung kann insbesondere als ein Akkumulator, beispielsweise als ein Lithium-Ionen-Akkumulator, ausgebildet sein.

Wenn die erfindungsgemäße elektrochemische Vorrichtung als ein Akkumulator ausgebildet ist, eignet sie sich insbesondere als eine hoch belastbare Energiequelle, beispielsweise für den Antrieb von Kraftfahrzeugen.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine Draufsicht auf eine Druckausgleichsvorrichtung zum Ausgleichen des Innendrucks in einem Gehäuse einer elektrochemischen Vorrichtung;
- Fig.2: einen schematischen Längsschnitt durch die Druckausgleichsvorrichtung aus Fig. 1, längs der Linie 2-2 in Fig. 1;
- Fig. 3: einen schematischen Querschnitt durch die Druckausgleichsvorrichtung aus Fig. 1, längs der Linie 3-3 in Fig. 1;
- Fig. 4: eine schematische perspektivische Darstellung der Druckausgleichsvorrichtung aus den Fig. 1 bis 3;
- Fig. 5: eine schematische Seitenansicht der Druckausgleichsvorrichtung aus den Fig. 1 bis 4, mit der Blickrichtung in Richtung des Pfeiles 5 in Fig. 1;
- Fig. 6: eine weitere schematische Seitenansicht der Druckausgleichsvorrichtung aus den Fig. 1 bis 5, mit der Blickrichtung in Richtung des Pfeiles 6 in Fig. 1;
- Fig. 7: eine schematische Draufsicht von unten auf die Druckausgleichsvorrichtung aus den Fig. 1 bis 6; und
- Fig. 8: eine vergrößerte Darstellung des Bereichs I aus der Fig. 2 bei einer zweiten Ausführungsform der Druckausgleichsvorrichtung, welche eine Einrichtung zum Verändern der Relativposition zwischen einem Notentgasungselement der Druckausgleichsvorrichtung und einer Membran der Druckausgleichsvorrichtung umfasst.

Gleiche oder funktional äquivalente Elemente sind in allen Figuren mit denselben Bezugszeichen bezeichnet.

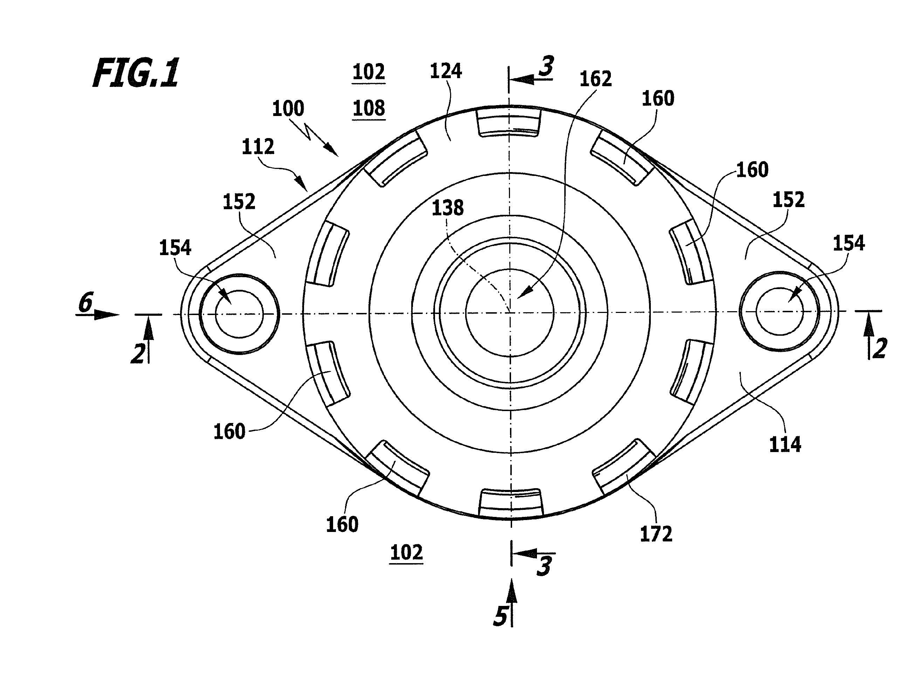

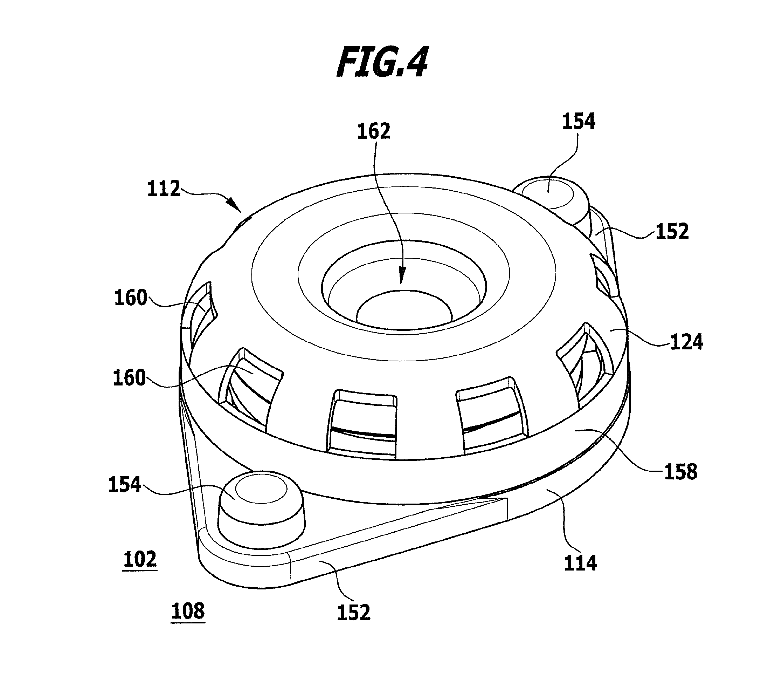

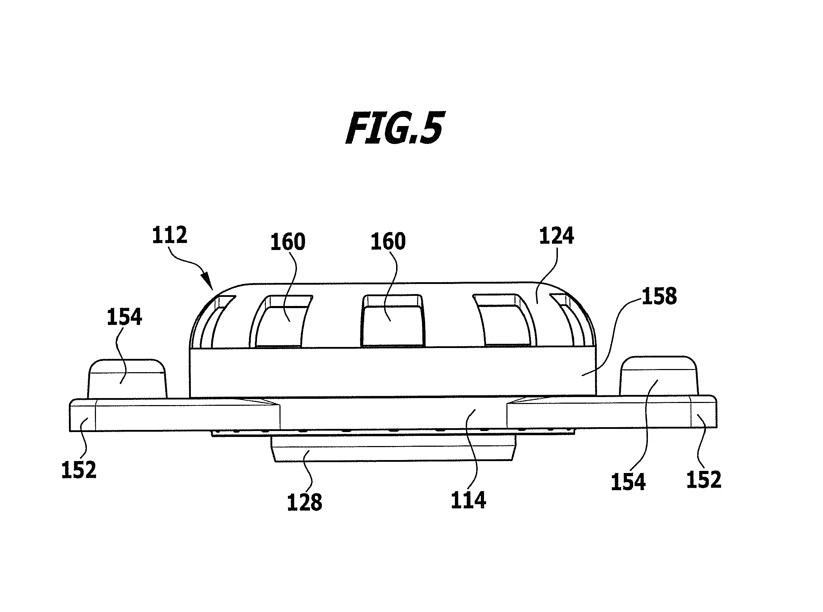

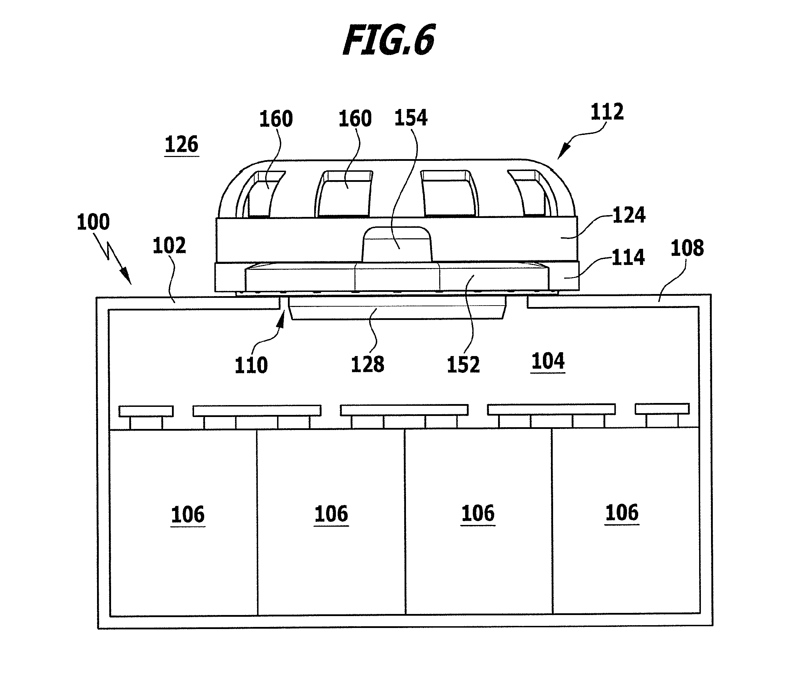

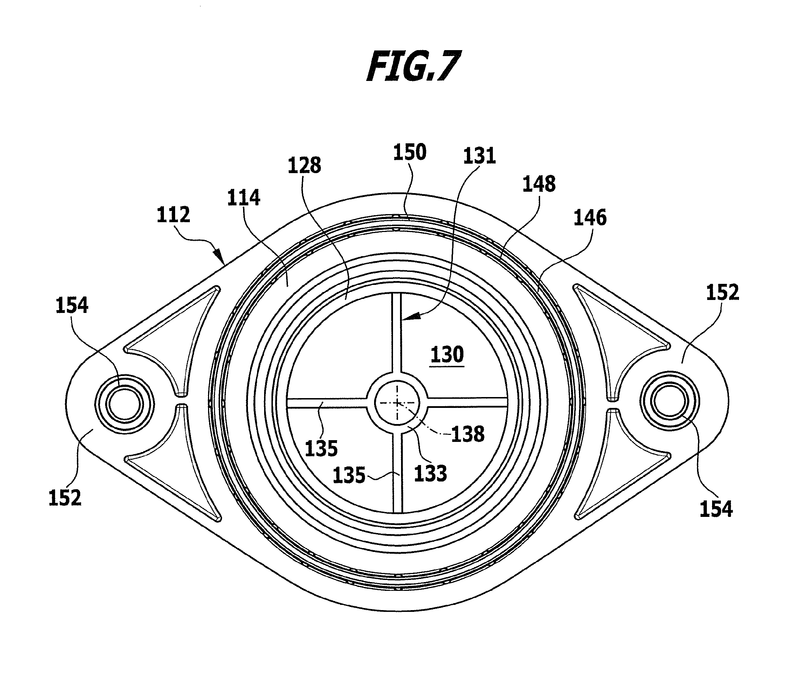

Eine als Ganzes mit 100 bezeichnete, in den Fig. 1 bis 7 und insbesondere in Fig. 6 schematisch als Ganzes dargestellte elektrochemische Vorrichtung umfasst ein geschlossenes Gehäuse 102, in dessen Innenraum 104 mehrere elektrochemische Zellen 106 angeordnet sind, welche elektrisch beispielsweise in Reihe oder parallel geschaltet sein können.

Das Gehäuse 102 umfasst eine Gehäusewand 108 mit einer, beispielsweise im Wesentlichen kreisförmigen, Aussparung 110, welche durch eine als Ganzes mit 112 bezeichnete Druckausgleichsvorrichtung verschlossen ist.

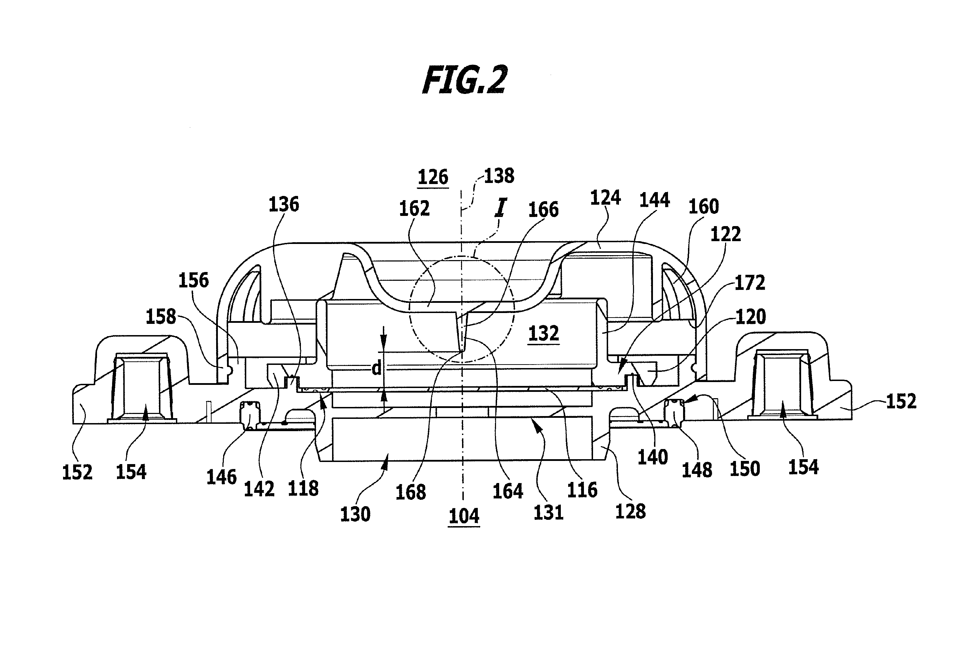

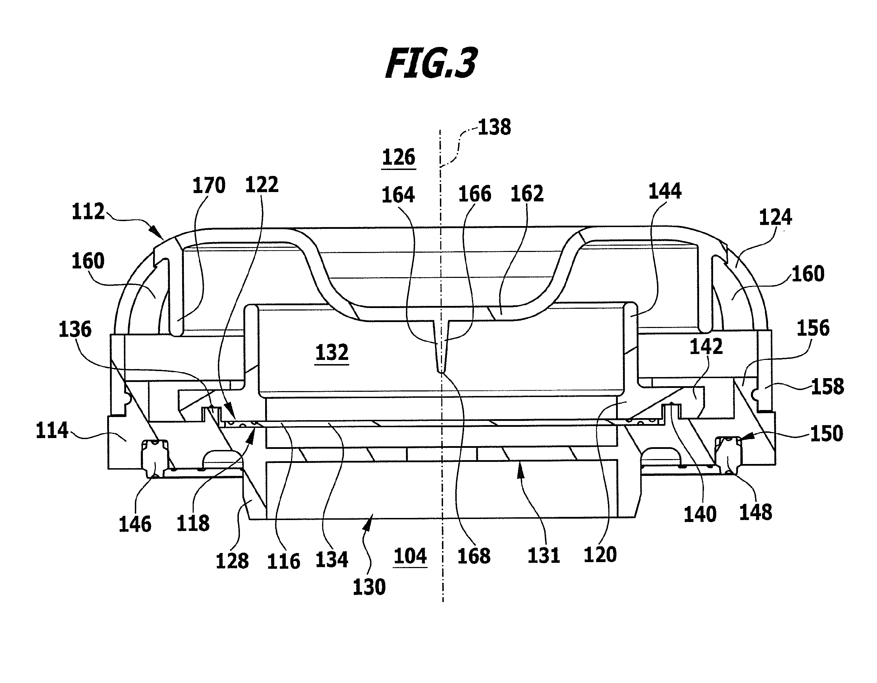

Wie insbesondere aus den Schnittdarstellungen der Fig. 2 und 3 zu ersehen ist, umfasst die Druckausgleichsvorrichtung 112 ein Trägerelement 114, mit welchem die Druckausgleichsvorrichtung 112 im montierten Zustand an der Gehäusewand 108 anliegt; ein Membranelement 116, das an einem Membranelementsitz 118 des Trägerelements 114 anliegt; ein mit dem Trägerelement 114 verbundenes Klemmelement 120, welches mit einem Klemmbereich 122 an der dem Trägerelement 114 abgewandten Seite des Membranelements 116 anliegt, so dass das Membranelement 116 durch Klemmung zwischen dem Trägerelement 114 und dem Klemmelement 120 gehalten ist; und ein mit dem Trägerelement 114 verbundenes Schutzelement 124, welches das Membranelement 116 und das Klemmelement 120 zu einem Außenraum 126 des Gehäuses 102 hin abdeckt, so dass durch das Schutzelement 124 eine mechanische Einwirkung von außerhalb des Gehäuses 102 auf das Membranelement 116 verhindert wird.

Wie am besten aus den Fig. 2 und 3 zu ersehen ist, umfasst das Trägerelement 114 einen, beispielsweise im Wesentlichen hohlzylindrischen, Gasdurchtrittskanal 128, welcher sich im montierten Zustand der Druckausgleichsvorrichtung 112 vorzugsweise zumindest teilweise in den Innenraum 104 des Gehäuses 102 hinein erstreckt.

Der Gasdurchtrittskanal 128 umgibt eine, beispielsweise im Wesentlichen kreisförmige, Gasdurchtrittsöffnung 130, durch welche der Innenraum 104 des Gehäuses 102 der elektrochemischen Vorrichtung 100 in Fluidverbindung mit einem Innenraum 132 der Druckausgleichsvorrichtung 112 steht.

Im Gasdurchtrittskanal 128 kann eine Versteifungsstruktur 131 angeordnet sein, welche insbesondere einen zentralen Ring 133 umfassen kann, der durch mehrere, beispielsweise vier, Streben 135 an einer Mantelwand des Gasdurchtrittskanals 128 gehalten ist.

Die Gasdurchtrittsöffnung 130 wird von dem Membranelement 116 überdeckt.

Das Membranelement 116 umfasst eine, beispielsweise im Wesentlichen kreisförmige, Membran 134, welche gaspermeabel ausgebildet und in Abhängigkeit von einer Änderung des Innendrucks im Innenraum 104 des Gehäuses 102 verformbar ist.

Die Membran 134 kann insbesondere ein poröses Kunststoffmaterial umfassen und ist vorzugsweise im Wesentlichen vollständig aus einem solchen porösen Kunststoffmaterial gebildet.

Das Kunststoffmaterial kann beispielsweise ein Fluorpolymer-Material umfassen und insbesondere im Wesentlichen vollständig aus einem Fluorpolymer-Material bestehen.

Besonders günstig ist es, wenn die Membran ein Polytetrafluorethylen-Material und/oder ein Polytetrafluorethylen-Compound umfasst, vorzugsweise im Wesentlichen vollständig aus einem der genannten Materialien gebildet ist.

Unter einem Polytetrafluorethylen-Compound ist dabei ein Gemisch aus einem Polytetrafluorethylen-Material und einem oder mehreren Füllstoffen zu verstehen.

Der Begriff Polytetrafluorethylen (PTFE) bezeichnet dabei in dieser Beschreibung und den beigefügten Ansprüchen auch modifizierte Polytetrafluorethylen-Materialien, bei denen ein Teil der Fluoratome des Polytetrafluorethylen durch Substituenten ersetzt ist.

Eine poröse, gaspermeable und wasserdruckbeständige Membran 134 aus einem PTFE-Material oder einem PTFE-Compound kann insbesondere dadurch hergestellt werden, dass ein Granulat eines PTFE-Materials oder eines PTFE-Compounds in einer zylindrischen Form gepresst und gesintert wird. Aus dem so gewonnenen, gesinterten Zylinder wird eine Schälfolie hergestellt, indem der Zylinder in Drehbewegung versetzt und ein Schälmesser gegen die Mantelfläche des Zylinders zugestellt wird. Aus der so gewonnenen Schälfolie kann die Membran 134 herausgetrennt, insbesondere herausgeschnitten oder ausgestanzt, werden.

Der Membranelementsitz 118 des Trägerelements 114, an welchem das Membranelement 116 (vorzugsweise im Wesentlichen flächig) anliegt, ist von einem ringförmigen, zu dem Klemmelement 120 hin vorstehenden Ringvorsprung 136 umgeben.

Der Ringvorsprung 136 des Trägerelements 114 greift in eine, vorzugsweise zu dem Ringvorsprung 136 im Wesentlichen komplementär ausgebildete, Ringnut 140 an der dem Trägerelement 114 zugewandten Seite des Klemmelements 120 ein.

Das Klemmelement 102, das insbesondere als ein Klemmring 142 ausgebildet ist, umfasst ferner einen, vorzugsweise im Wesentlichen hohlzylindrischen, Gasdurchtrittskanal 144, welcher im Wesentlichen koaxial zu der Mittelachse 138 der Druckausgleichsvorrichtung 112 und im Wesentlichen koaxial zu der Gasdurchtrittsöffnung 130 und dem Gasdurchtrittskanal 128 des Trägerelements 114 sowie im Wesentlichen koaxial zu der Membran 134 des Membranelements 116 ausgebildet und angeordnet ist.

Das Klemmelement 120 und/oder das Trägerelement 114 ist vorzugsweise aus einem Kunststoffmaterial, insbesondere als ein Kunststoff-Spritzgießteil, ausgebildet.

Das Klemmelement 120 und/oder das Trägerelement 114 kann insbesondere aus einem Thermoplast-Kunststoffmaterial oder aus einem Duroplast-Kunststoffmaterial gebildet sein.

Insbesondere kann das Klemmelement 120 und/oder das Trägerelement 114 ein Polypropylen-Material, ein Polyethylen-Material und/oder ein Polyamid-Material umfassen.

Das Klemmelement 120 und das Trägerelement 114 können grundsätzlich in beliebiger Weise aneinander festgelegt sein, um zwischen sich das Membranelement 116 einzuklemmen.

Das Klemmelement 120 und das Trägerelement 114 können lösbar oder unlösbar miteinander verbunden sein.

Beispielsweise kann vorgesehen sein, dass das Klemmelement 120 und das Trägerelement 114 stoffschlüssig, insbesondere durch Verklebung und/oder durch Verschweißung, miteinander verbunden sind.

Das Klemmelement 120 und das Trägerelement 114 können insbesondere durch Ultraschallschweißung oder durch Laserschweißung miteinander verbunden sein.

Alternativ oder ergänzend hierzu kann vorgesehen sein, dass das Klemmelement 120 und das Trägerelement 114 durch Verclipsung oder Verrastung oder durch Verschraubung miteinander verbunden sind.

An der dem Klemmelement 120 abgewandten Seite des Trägerelements 114, mit welcher das Trägerelement 114 im montierten Zustand der Druckausgleichsvorrichtung 112 an der Außenseite der Gehäusewand 108 des Gehäuses 102 anliegt, ist das Trägerelement 114 mit einem ringförmigen Dichtelement 146 versehen, welches den Gasdurchtrittskanal 128 des Trägerelements 114 ringförmig umgibt.

Das Dichtelement 146 kann insbesondere als ein O-Ring ausgebildet sein, der zumindest teilweise in einer an dem Trägerelement 114 vorgesehenen Ringnut 150 angeordnet ist.

Das Dichtelement 146 ist vorzugsweise aus einem Elastomermaterial, insbesondere aus einem elastomeren Kunststoffmaterial, gebildet.

Wie ferner am besten aus den Fig. 1 und 2 zu ersehen ist, ist das Trägerelement 114, vorzugsweise radial außerhalb des Dichtelements 146, mit einem oder mehreren Befestigungsflanschen 152 versehen, von denen jeder mindestens eine Befestigungsmittelaufnahme 154 aufweist.

Jede der Befestigungsmittelaufnahmen 154 dient zur Aufnahme jeweils eines (nicht dargestellten) Befestigungsmittels, beispielsweise einer Befestigungsschraube, mittels welcher die Druckausgleichsvorrichtung 112, vorzugsweise lösbar, an dem Gehäuse 102 der elektrochemischen Vorrichtung 100 festlegbar ist.

An seiner im montierten Zustand der Druckausgleichsvorrichtung 112 der Gehäusewand 108 abgewandten Seite ist das Trägerelement 114 ferner mit einem längs der Richtung der Mittelachse 138 vorspringenden, ringförmigen Haltevorsprung 156 versehen, welcher mit einem ebenfalls ringförmig ausgebildeten Halteabschnitt 158 des Schutzelements 124 zusammenwirkt, um das Schutzelement 124 an dem Trägerelement 114 zu halten.

Dabei können das Schutzelement 124 und das Trägerelement 114 lösbar oder unlösbar miteinander verbunden sein.

Das Schutzelement 124 umfasst vorzugsweise ein Kunststoffmaterial und kann insbesondere als ein Kunststoff-Spritzgießteil ausgebildet sein.

Das Schutzelement 124 umfasst vorzugsweise ein Thermoplast-Kunststoffmaterial und/oder ein Duroplast-Kunststoffmaterial.

Insbesondere kann das Schutzelement 124 ein Polypropylen-Material, ein Polyethylen-Material und/oder ein Polyamid-Material umfassen.

Das Schutzelement 124 kann beispielsweise stoffschlüssig, insbesondere durch Verklebung und/oder durch Verschweißung, mit dem Trägerelement 114 verbunden sein.

Insbesondere kann das Schutzelement 124 durch Ultraschallschweißung und/oder durch Laserschweißung mit dem Trägerelement 114 verbunden sein.

Alternativ oder ergänzend hierzu kann auch vorgesehen sein, dass das Schutzelement 124 durch Verclipsen, Verrastung und/oder Verschraubung mit dem Trägerelement 114 verbunden ist.

Das Schutzelement 124 kann insbesondere als ein Deckel oder eine Kappe ausgebildet sein und kann eine im Wesentlichen kuppelförmige Gestalt aufweisen. Das Schutzelement 124 erstreckt sich von dem Halteabschnitt 158, an dem das Schutzelement 124 mit dem Trägerelement 114 verbunden ist, ausgehend über den zentralen Bereich des Trägerelements 114, das Klemmelement 120 und das Membranelement 116 hinweg, so dass diese Bestandteile der Druckausgleichsvorrichtung 112 durch das Schutzelement 124 vor einer mechanischen Einwirkung aus dem Außenraum 126 des Gehäuses 102 der elektrochemischen Vorrichtung 100 geschützt sind.

Um einen Gasdurchtritt von dem Innenraum 132 der Druckausgleichsvorrichtung 112 in den Außenraum 126 zu ermöglichen, ist die Wandung des Schutzelements 124 mit einer oder mehreren, beispielsweise zehn, Gasdurchgangsöffnungen 160 versehen, wie dies am besten aus Fig. 1 zu ersehen ist.

Wenn mehrere Gasdurchgangsöffnungen 160 an dem Schutzelement 124 vorgesehen sind, so sind diese vorzugsweise im Wesentlichen äquidistant längs des Umfangs des Schutzelements 124 verteilt.

Von einem zentralen Bereich 162 des Schutzelements 124, welcher von der Mittelachse 138 der Druckausgleichsvorrichtung 112 geschnitten wird, steht ein Notentgasungselement 164 in den Innenraum 132 der Druckausgleichsvorrichtung 112 vor.

Das Notentgasungselement 164 kann insbesondere als ein Notentgasungsstachel 166 ausgebildet sein, der an einer Spitze 168 endet.

Die Spitze 168 des Notentgasungselements 164 liegt der Membran 134 in einem vorbestimmten Abstand d (im Ruhezustand der Membran 134) gegenüber.

Das Notentgasungselement 164 erstreckt sich vorzugsweise längs der Mittelachse 138 der Druckausgleichsvorrichtung 112. Die Spitze 168 des Notentgasungselements 164 liegt vorzugsweise auf der Mittelachse 138 der Druckausgleichsvorrichtung 112.

Je nach der Größe des gewünschten Abstandes d zwischen der Spitze 168 des Notentgasungselements 164 und der Membran 134 ist der zentrale Bereich 162 des Schutzelements 124, an welchem das Notentgasungselement 164 angeordnet ist, als eine Vertiefung (wie beim dargestellten Ausführungsbeispiel) oder als eine Erhebung (nicht dargestellt) in dem deckel- oder kappenförmigen Schutzelement 124 ausgebildet.

Um einen direkten Zugang von den Gasdurchgangsöffnungen 160 des Schutzelements 124 zu der Membran 134 zu verhindern, kann vorgesehen sein, dass radial einwärts von den Gasdurchgangsöffnungen 160 an dem Schutzelement 124 ein ringförmiger Vorsprung 170 vorgesehen ist, welcher sich von dem Schutzelement 124 aus in den Innenraum 132 der Druckausgleichsvorrichtung 112 hinein erstreckt.

Der ringförmige Vorsprung 170 erstreckt sich vorzugsweise in Richtung der Mittelachse 138 bis zu der axialen Position des dem Trägerelement 114 am nächsten liegenden Randes 172 der Gasdurchgangsöffnungen 160 des Schutzelements 124.

Ferner ist vorzugsweise vorgesehen, dass der ringförmige Vorsprung 170 an dem Schutzelement 124 und der Gasdurchtrittskanal 144 des Klemmelements 120 einander in Richtung der Mittelachse 138 überlappen, so dass Gas aus dem Bereich der Membran 134 in einem durch den Gasdurchtrittskanal 144 und den ringförmigen Vorsprung 170 vorgegebenen Zickzack-Kurs durch den Innenraum 132 der Druckausgleichsvorrichtung 112 zu den Gasdurchgangsöffnungen 160 strömen muss, um aus der Druckausgleichsvorrichtung heraus in den Außenraum 126 zu gelangen.

Die vorstehend beschriebene Druckausgleichsvorrichtung 112 funktioniert wie folgt:

Im Normalbetrieb der elektrochemischen Vorrichtung 100 ermöglicht die Druckausgleichsvorrichtung 112 einen Druckausgleich zwischen dem Innenraum 104 des Gehäuses 102 der elektrochemischen Vorrichtung 100 einerseits und dem Außenraum 126 des Gehäuses 102 andererseits.

Hierzu kann Gas, insbesondere Luft, aus dem Innenraum 104 des Gehäuses 102 durch den Gasdurchtrittskanal 128 des Trägerelements 114 mit der Gasdurchtrittsöffnung 130, durch die poröse, gaspermeable Membran 134, durch den auf der dem Trägerelement 114 abgewandten Seite der Membran 134 liegenden Teil des Innenraums 132 der Druckausgleichsvorrichtung 112 und durch die Gasdurchgangsöffnungen 160 in dem Schutzelement 124 in den Außenraum 126 oder, in umgekehrter Richtung, von dem Außenraum 126 in den Innenraum 104 des Gehäuses 102 gelangen.

Hierdurch ist ein zuverlässiger Druckausgleich durch die Druckausgleichsvorrichtung 112 hindurch bei umweltbedingten Druckschwankungen möglich.

Die Membran 134 weist eine hinreichende Gaspermeabilität und Wasserdruckbeständigkeit für den Druckausgleich auf und schützt den Innenraum 104 des Gehäuses 102 vor dem Eindringen von Staub und Wasser.

Die Membran 134 ist hinreichend stark ausgelegt, um ein ungewolltes Versagen der Membran 134 durch eine Wasserdruckbeaufschlagung von außen zu vermeiden.

Wenn hingegen in einem Störungsfall, beispielsweise bei Versagen einer der elektrochemischen Zellen 106 im Innenraum 104 des Gehäuses 102, im Innenraum 104 des Gehäuses 102 ein hoher Überdruck entsteht (beispielsweise durch Austreten von Elektrolytgasen, wie HF oder H₂, aus einer der elektrochemischen Zellen 106), so wölbt sich die Membran 134 durch diese Druckbeaufschlagung in Richtung auf das Notentgasungselement 164 aus und trifft auf die Spitze 168 des Notentgasungselements 164.

Die Spitze 168 des Notentgasungselements 164 fügt der Membran 134 eine Vorbeschädigung zu, die innerhalb sehr kurzer Zeit (innerhalb weniger Millisekunden) zum Versagen und zur Zerstörung der Membran 134 führt, so dass ein hinreichend großer Querschnitt der Gasdurchtrittsöffnung 130 nicht mehr von der Membran 134 gesperrt wird, sondern zur Notentgasung freigegeben ist.

Durch geeignete Wahl des Abstands d zwischen dem Notentgasungselement 164 und der Membran 134 im Ruhezustand der Membran 134 kann der Berstdruck, bei welchem die Membran 134 durch das Notentgasungselement 164 beschädigt wird, individuell und in engen Grenzen einstellt werden.

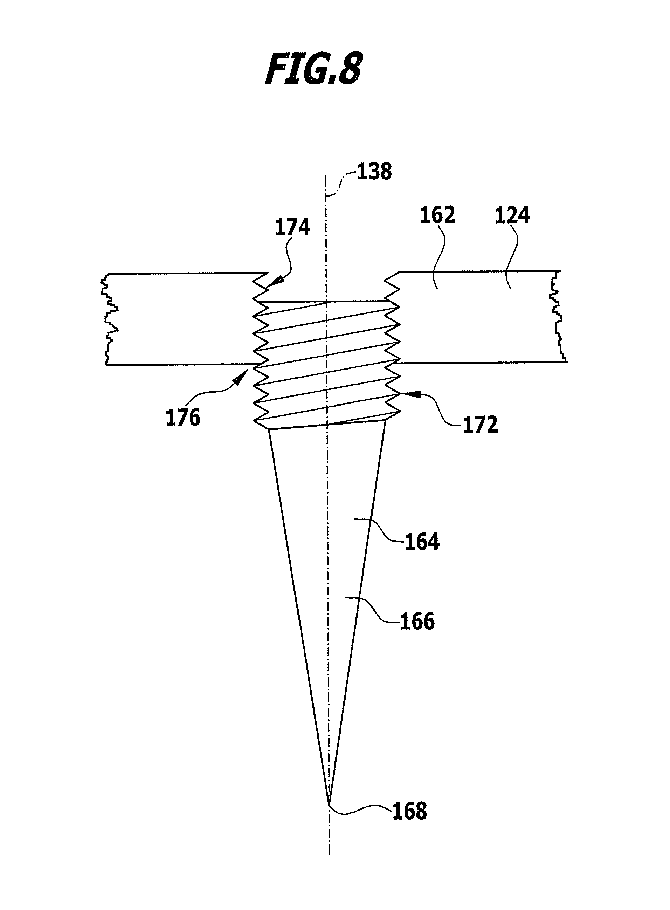

Eine in Fig. 8 ausschnittsweise dargestellte zweite Ausführungsform einer Druckausgleichsvorrichtung 112 unterscheidet sich von der in den Fig. 1 bis 7 dargstellten ersten Ausführungsform dadurch, dass das Notentgasungselement 164 nicht in einem unveränderlich vorgegebenen Abstand von der Membran 134 an dem Schutzelement 124 festgelegt ist, sondern stattdessen das Notentgasungselement 164 mit einem Einstellgewinde 172 versehen ist, welches mit einem hierzu komplementären Gewinde 174 an dem Schutzelement 124 so zusammen wirkt, dass die Position des Notentgasungselements 164 relativ zu dem Schutzelement 124 (und damit auch relativ zu der Membran 134 im Ruhezustand) in Richtung der Mittelachse 138 dadurch verändert werden kann, dass das Stellgewinde 172 des Notentgasungselements 164 mehr oder weniger weit in das Gewinde 174 des Schutzelements 124 hineingedreht wird.

Dabei kann insbesondere vorgesehen sein, dass das Stellgewinde 172 als ein Außengewinde und das Gewinde 174 als ein hierzu komplementäres Innengewinde ausgebildet ist.

Hierdurch kann der Abstand d zwischen der Spitze 168 des Notentgasungselements 164 und der Membran 134 und damit der Berstdruck, bei welchem die durch einen Druckanstieg im Innenraum 104 des Gehäuses 102 zu dem Notentgasungselement 164 vorgewölbte Membran 134 in Kontakt mit der Spitze 168 des Notentgasungselements 164 kommt und von derselben beschädigt wird, in einfacher Weise eingestellt oder justiert werden.

Die in Fig. 8 dargestellte zweite Ausführungsform der Druckausgleichsvorrichtung 112 umfasst somit eine Einrichtung 176 zum Verändern der Relativposition zwischen dem Notentgasungselement 164 und der Membran 134 im Ruhezustand der Membran 134.

Während bei der in den Fig. 1 bis 7 dargestellten ersten Ausführungsform das Notentgasungselement 164 vorzugsweise einstückig mit dem Schutzelement 124 ausgebildet ist und vorzugsweise aus einem Kunststoffmaterial gebildet ist, kann bei der zweiten Ausführungsform das Notentgasungselement 164 aus einem von dem Material des Schutzelements 124 verschiedenen Material gebildet sein.

So kann beispielsweise vorgesehen sein, dass das Notentgasungselement 164 bei der zweiten Ausführungsform ein metallisches Material umfasst und vorzugsweise im Wesentlichen vollständig aus einem metallischen Material gebildet ist.

Im übrigen stimmt die in Fig. 8 dargestellte zweite Ausführungsform der Druckausgleichsvorrichtung 112 hinsichtlich Aufbau, Funktionsweise und Herstellungsweise mit der in den Fig. 1 bis 7 dargestellten ersten Ausführungsform überein, auf deren vorstehende Beschreibung insoweit Bezug genommen wird.

Sowohl bei der in den Fig. 1 bis 7 dargestellten ersten Ausführungsform als auch bei der in Fig. 8 dargestellten zweiten Ausführungsform der Druckausgleichsvorrichtung 112 kann alternativ vorgesehen sein, dass das Membranelement 116 nicht durch Klemmung zwischen dem Trägerelement 14 und dem Klemmelement 120 in der Druckausgleichsvorrichtung 112 befestigt ist, sondern dass stattdessen das Trägerelement 114 und das Klemmelement 120 einstückig miteinander ausgebildet sind und das Membranelement 116 an seinem Umfang mit dem Material des Trägerelements 114 umspritzt wird, sodass das Membranelement 116 und das Trägerelement 114 stoffschlüssig miteinander verbunden sind.

Dies kann insbesondere dadurch erfolgen, dass das Membranelement 116 in ein Spritzgießwerkzeug eingelegt und mit dem Material des Trägerelements 114 umspritzt wird.

## Patentansprüche

1. Druckausgleichsvorrichtung zum Ausgleichen eines Innendrucks in einem Gehäuse (102) einer elektrochemischen Vorrichtung (100), umfassend mindestens eine Gasdurchtrittsöffnung (130) und mindestens ein Membranelement (116) mit einer in Abhängigkeit von einer Änderung des Innendrucks verformbaren, gaspermeablen Membran (134), durch welche die Gasdurchtrittsöffnung (130) gesperrt ist,
**dadurch gekennzeichnet,**
**dass** die Druckausgleichsvorrichtung (112) ein Notentgasungselement (164) umfasst, welches so ausgebildet und angeordnet ist, dass es bei Erreichen einer kritischen Verformung der Membran (134) die Membran (134) derart beschädigt, dass die Membran (134) die Gasdurchtrittsöffnung (130) zumindest teilweise für eine Notentgasung des Gehäuses (102) freigibt.

2. Druckausgleichsvorrichtung nach Anspruch 1, **dadurch gekennzeichnet, dass** die Membran (134) ein poröses Kunststoffmaterial umfasst.

3. Druckausgleichsvorrichtung nach einem der Ansprüche 1 oder 2, **dadurch gekennzeichnet, dass** die Membran (134) ein Fluorpolymer-Material umfasst.

4. Druckausgleichsvorrichtung nach einem der Ansprüche 1 bis 3, **dadurch gekennzeichnet, dass** die Druckausgleichsvorrichtung (112) ein Trägerelement (114) und ein Klemmelement (120) umfasst, wobei das Membranelement (116) durch Klemmung zwischen dem Trägerelement (114) und dem Klemmelement (120) gehalten ist.

5. Druckausgleichsvorrichtung nach Anspruch 4, **dadurch gekennzeichnet, dass** das Trägerelement (114) und das Klemmelement (120) stoffschlüssig miteinander verbunden sind.

6. Druckausgleichsvorrichtung nach Anspruch 5, **dadurch gekennzeichnet, dass** das Trägerelement (114) und das Klemmelement (120) miteinander verrastet sind.

7. Druckausgleichsvorrichtung nach einem der Ansprüche 1 bis 6, **dadurch gekennzeichnet, dass** die Druckausgleichsvorrichtung (112) ein Trägerelement (114) umfasst, in dessen Material das Membranelement (116) zumindest teilweise eingebettet ist.

8. Druckausgleichsvorrichtung nach einem der Ansprüche 1 bis 7, **dadurch gekennzeichnet, dass** die Druckausgleichsvorrichtung mittels mindestens eines Befestigungsmittels an dem Gehäuse (102) der elektrochemischen Vorrichtung (100) festlegbar ist.

9. Druckausgleichsvorrichtung nach Anspruch 8, **dadurch gekennzeichnet, dass** die Druckausgleichsvorrichtung (112) mindestens einen Befestigungsflansch (152) mit mindestens einer Befestigungsmittelaufnahme (154) für ein Befestigungsmittel aufweist.

10. Druckausgleichsvorrichtung nach einem der Ansprüche 1 bis 9, **dadurch gekennzeichnet, dass** die Druckausgleichsvorrichtung (112) mindestens ein Dichtelement (146) zum Abdichten zwischen der Druckausgleichsvorrichtung (112) und dem Gehäuse (102) der elektrochemischen Vorrichtung (100) umfasst.

11. Druckausgleichsvorrichtung nach einem der Ansprüche 1 bis 10, **dadurch gekennzeichnet, dass** die Druckausgleichsvorrichtung (112) mindestens ein Schutzelement (124) umfasst, durch welches eine Außenseite der Membran (134) vor einer mechanischen Beschädigung von außerhalb der Druckausgleichsvorrichtung (112) geschützt ist.

12. Druckausgleichsvorrichtung nach Anspruch 11, **dadurch gekennzeichnet, dass** das Schutzelement (124) mindestens eine Gasdurchgangsöffnung (160) aufweist.

13. Druckausgleichsvorrichtung nach einem der Ansprüche 1 bis 12, **dadurch gekennzeichnet, dass** die Druckausgleichsvorrichtung (112) mindestens eine Einrichtung (176) zum Verändern der Relativposition zwischen dem Notentgasungselement (164) und der Membran (134) umfasst.

14. Druckausgleichsvorrichtung nach Anspruch 13, **dadurch gekennzeichnet, dass** die Einrichtung (176) zum Verändern der Relativposition ein an dem Notentgasungselement (164) vorgesehenes Einstellgewinde (172) umfasst.

15. Verwendung einer Druckausgleichsvorrichtung nach einem der Ansprüche 1 bis 14 in einer elektrochemischen Vorrichtung, welche ein Gehäuse (102) und mehrere in dem Gehäuse angeordnete elektrochemische Zellen (106) umfasst, wobei die Druckausgleichsvorrichtung (112) an dem Gehäuse (102) angeordnet ist.

16. Elektrochemische Vorrichtung, umfassend ein Gehäuse (102), eine oder mehrere in dem Gehäuse (102) angeordnete elektrochemische Zellen (106) und mindestens eine an dem Gehäuse (102) angeordnete Druckausgleichsvorrichtung (112) nach einem der Ansprüche 1 bis 14.
